# EUROPÄISCHE PATENTSCHRIFT

(11) **EP 2 349 793 B1**
(45) Veröffentlichungstag und Bekanntmachung des Hinweises auf die Patenterteilung: **27.02.2013**
(21) Anmeldenummer: 09771715.1
(22) Anmeldetag: 24.11.2009
(51) Int. Cl.: B26F 1/00, B32B 5/14, B32B 7/02, B32B 9/02, B60R 21/2165, B23K 26/40, B23K 26/36

(54) **AIRBAGABDECKUNG UND VERFAHREN ZU IHRER HERSTELLUNG**
AIRBAG COVER AND METHOD FOR PRODUCING THE SAME
COUVERCLE DE COUSSIN DE SÉCURITÉ GONFLABLE ET PROCÉDÉ DE FABRICATION ASSOCIÉ

(30) Priorität: 24.11.2008 DE 102008059169
(43) Veröffentlichungstag der Anmeldung: 03.08.2011
(73) Patentinhaber: Faurecia Innenraum Systeme GmbH, 76767 Hagenbach (DE)
(72) Erfinder: SAUER, Rolf, 68794 Oberhausen-Rheinhausen (DE); BRADFISCH, Karsten, Frank, 66955 Pirmasens (DE)
(74) Vertreter: Pfenning, Meinig & Partner GbR
(86) Internationale Anmeldenummer: PCT/EP2009/008651
(87) Internationale Veröffentlichungsnummer: WO 2010/057679

(56) Entgegenhaltungen:
- EP-A- 0 832 788
- EP-A- 1 705 076
- EP-A- 1 980 455
- WO-A-2008/061600
- DE-A1- 19 944 371
- DE-A1-102006 027 082
- DE-A1-102007 007 635
- US-B1- 6 199 897

## Beschreibung

Gegenstand der Anmeldung ist eine Airbaganordnung mit einem Träger und einer auf dem Träger angeordneten sichtseitigen Oberflächenschicht aus Leder oder einem Lederimitat, wobei die Oberflächenschicht eine einheitliche Dicke aufweist und der Träger eine entlang einer Aufreißlinie eingebrachte Trägerausdünnung besitzt. Zwischen dem Träger und der Oberflächenschicht ist eine Verstärkungsschicht mit einer lokalen Schwächung angeordnet, wobei die Oberflächenschicht unmittelbar mit der Verstärkungsschicht verbunden ist.

Die Verwendung von hochwertigen Materialien wie Leder oder einem Lederimitat führt im Austrittsbereich von Airbags immer wieder zu Problemen. Dies liegt unter anderem daran, dass eine Lederoberfläche von gewöhnlicher Dicke nicht oder nur schlecht reißt und ein Öffnen der darunter liegenden Airbagklappe nicht zulässt. In der Vergangenheit wurden im Stand der Technik oftmals Ziernähte verwendet, welche den Verlauf einer unter der Oberfläliegenden Aufreißlinie nachzeichnen. Dabei sind die Teilbereiche der Oberflächenschicht mit einem Garn verbundenen verbunden, wobei das Garn eine geringere Reißfestigkeit als die verwendete Leder- oder Lederimitatschicht aufweist. Hierdurch wird ein kontrolliertes Aufreißen der Airbagklappe möglich.

In jüngerer Zeit wird versucht, die Verwendung von Ziernähten zu vermeiden. So zeigt beispielsweise die FR 2721876 A1 eine Airbagabdeckvorrichtung mit einer Lederoberfläche einheitlicher Dicke, welche auf einem Träger angeordnet ist. Dabei ist zwischen dem Träger und der Oberflächenschicht abschnittsweise eine Schaumschicht und im Bereich eines in den Träger eingelassenen Spaltes ein Abstandsgewirke angeordnet. Der in dem Träger angeordnete Spalt zieht sich durch das Abstandsgewirke hindurch und endet an der Unterseite der Lederoberfläche. Aufgrund der Festigkeit des Abstandsgewirkes ist es somit möglich, ein Aufreißen der Airbagklappe entlang der Kerbe zu ermöglichen. Der Nachteil einer derartigen Ausbildung der Airbaganordnung ist die deutlich wahrnehmbare Kerbung im Bereich der Lederoberfläche.

Einen alternativen Ansatz hierzu verfolgt die DE 10 2005 034 354 A1. Die dort offenbarte Airbagabdeckung weist einen Träger, eine geschlossenporige Schaumstoffschicht, eine Folienschicht und eine auf der Folienschicht angeordnete Sichtbedeckung aus Leder auf. Um ein sicheres Aufreißen entlang einer Aufreißlinie zu ermöglichen, wird die Sichtbedeckung aus Leder im Bereich der Aufreißlinie lokal geschwächt, wobei die lokale Schwächung stetig ausgebildet ist. Aufgrund des stetigen Übergangs ist es möglich, die Schwächung derart auszubilden, dass diese nicht wahrnehmbar ist. Ein gravierender Nachteil an dem in der DE 10 2005 034 354 A1 offenbarten Gegenstand ist der Prozess der lokalen Schwächung der Sichtbedeckung aus Leder. Das Einbringen der lokalen Schwächung erlaubt nur geringe Fertigungstoleranzen, so dass oftmals eine große Menge an Ausschuss produziert wird. Dies erhöht die Kosten beträchtlich.

Das Dokument DE 10 2006 027 A1 zeigt eine gattungsbildende Airbagabdeckung entsprechend dem Oberbegriff des Anspruches 1, wobei ein Aufreißfaden die Verstärkungsschicht schwächt.

Aufgabe der vorliegenden Erfindung ist es, eine Airbagabdeckung sowie ein Verfahren zur Herstellung einer derartigen Airbagabdeckung zu schaffen, welche die vorgenannten Nachteile nicht aufweisen.

Die Aufgabe wird gelöst mittels einer Airbagabdeckung nach dem Anspruch 1 sowie eines Herstellungsverfahrens nach dem Anspruch 7.

Die erfindungsgemäße Airbagabdeckung weist eine Oberflächenschicht aus Leder oder einem Lederimitat auf, welche eine einheitliche Dicke weniger oder gleich 1 mm besitzt. Die Herstellung einer derartig ausgebildeten Oberflächenschicht auch großflächigen Formats - ist bedeutend einfacher gegenüber dem Einbringen einer lokalen Schwächung, welche stetig ausgebildet ist und in engen Toleranzbereichen gefertigt werden muss.

Damit die Lederoberfläche beim Entfalten eines unter der Airbagabdeckung angeordneten Airbags sicher aufreißt, wird eine Dicke von weniger als 1 mm, vorzugsweise weniger als 0,5 mm, verwendet. Um eine Oberflächenschicht aus Leder bzw. Lederimitat mit einer solchen Dicke herzustellen, kann die Oberflächenschichtgespalten werden oder in einem Schleifverfahren auf die gewünschte Dicke abgeschliffen werden. Bei der Ausdünnung der Oberflächenschicht muss nicht darauf geachtet werden, dass die Lederoberfläche lediglich in denjenigen Bereichen geschwächt wird, welche sich im Bereich einer späteren Aufreißlinie befinden. Dies vereinfacht die Herstellung der Airbaganordnung in beachtlichem Maße.

Da stark ausgedünnte Lederoberflächen bzw. Oberflächen aus Lederimitat jedoch nicht die gewünschten haptischen Eigenschaften aufweisen, wird unterhalb der Oberflächenschicht einheitlicher Dicke eine Verstärkungsschicht angeordnet. Mithilfe der Verstärkungsschicht wird zwischen der Oberflächenschicht und dem Träger eine Schicht eingeführt, welche eine größere Weichheit aufweist als der Träger und somit die gewünschten haptischen Eigenschaften der auf den Träger aufgebrachten Oberflächenschicht stellt. Dies betrifft insbesondere das leichte Nachgeben der Lederoberfläche bei Berührung.

Die Verstärkungsschicht weist einen ungeschwächten und einen geschwächten Bereich auf, wobei im geschwächten Bereich eine lokale Schwächung eingebracht ist, die sich im Bereich der Aufreißlinie befindet. D.h. insbesondere, dass die von der Sichtseite her betrachtete unterhalb der Oberflächenschicht liegende Fläche der lokalen Schwächung bzw. des geschwächten Bereichs größer ist als die von der Sichtseite her betrachtete Fläche einer etwaig in die Verstärkungsschicht hineinreichenden Materialaussparung der Aufreißlinie bzw. die Fläche der in den Träger eingebrachten Trägerausdünnung, wobei eine Materialaussparung bzw. die Trägerausdünnung als Teil der Aufreißlinie beispielsweise in Form einer Schlitzung oder Perforation in die Airbagabdeckung eingebracht wurde. In anderen Worten umfasst die Fläche der lokalen Schwächung bzw. des geschwächten Bereichs die Fläche der Aufreißlinie und die lokale Schwächung bzw. der geschwächte Bereich der Verstärkungsschicht ist von der Aufreißlinie bzw. einer die Aufreißlinie bildenden Schwächung verschieden.

Der geschwächte Bereich umfasst im Querschnitt zur Sichtseite eine kontinuierliche Veränderung der Dicke der Verstärkungsschicht über einen Bereich größer als den Bereich der Aufreißlinie hinweg.

Weiterhin ist die Dicke der Verstärkungsschicht im ungeschwächten Bereich gegenüber der Dicke im geschwächten Bereich größer. Dies bedeutet insbesondere, dass auch ohne eine beispielsweise als Perforation eingebrachte Aufreißlinie bzw. im Bereich der lokalen Schwächung ausserhalb beispielsweise einzelner Perforationslöcher die nicht-verschwindende minimale Dicke der lokalen Schwächung geringer ist als die Dicke des ungeschwächten Bereichs.

Allgemein ist die lokale Schwächung des geschwächten Bereichs besteht unabhängig von beispielsweise Materialaussparungen einer Aufreißlinie. Der Zusammenhang zwischen der Aufreißlinie und der lokalen Schwächung besteht lediglich in Bezug auf deren räumlicher Anordnung zueinander.

Im Bereich der lokalen Schwächung ist die Dicke der Verstärkungsschicht minimal, jedoch nicht verschwindend. Dies bedeutet, dass im Bereich der lokalen Schwächung die Dicke der Verstärkungsschicht zwar gegen null tendiert, jedoch nicht verschwindet. Hier können beispielsweise nicht-verschwindende Dicken von 0,05 mm benutzt werden. Die nicht-verschwindende Dicke der Verstärkungsschicht an der lokalen Schwächung verbessert die Haptik im Bereich der Aufreißlinie.

Im ungeschwächten Bereich, welcher sich außerhalb des Bereichs der Aufreißlinie befindet, kann die Dicke der Verstärkungsschicht bis zu 2 mm, besonders vorzugsweise bis zu 1 mm oder weniger, betragen. Diese Dicke ist ausreichend, um die haptischen Eigenschaften einer Lederoberfläche, welche dicker als 1 mm ist, zu imitieren.

In den Träger selbst wird eine Trägerausdünnung in Form einer Perforation oder ähnlicher im Stand der Technik bekannter Maßnahmen eingebracht. Die Perforation kann beispielsweise mittels Lasers oder Fräsens hergestellt werden. Die Aufreißlinie wird dann durch den Verlauf der Perforationen in der Ebene der Airbagabdeckung definiert. Die im Rahmen der Aufreißlinie eingebrachten Materialschwächungen sind von der lokalen Schwächung der Verstärkungsschicht verschieden.

Die erfindungsgemäße Airbagabdeckung ist bereits deshalb vorteilhaft, da das Einbringen einer lokalen Schwächung in einem geschwächten Bereich der Verstärkungsschicht bei einer Verstärkungsschicht weitaus einfacher ist als bei einer Leder- oder Lederimitatschicht. So kann die Verstärkungsschicht beispielsweise in einem Formwerkzeug oder mittels eines Presswerkzeugs hergestellt werden. Beim anschließenden Verbinden der Verstärkungsschicht mit der Oberflächenschicht einheitlicher Dicke muss nicht darauf geachtet werden, wie die Oberflächenschicht auf der Verstärkungsschicht angeordnet wird, da die lokale Schwächung nicht im Bereich der Lederoberfläche, sondern im Bereich der Verstärkungsschicht angeordnet ist.

Die Verstärkungsschicht wird beispielsweise durch ein Gewebe oder Gewirke oder eine Folienschicht gebildet. Als Gewebe bietet sich beispielsweise ein Kunstleder an, als Gewirke ein Polyester- oder Baumwollgewirke und als Kunststoffschicht eine Folie aus Polyolefinen. Der Träger der Airbagabdeckung, welcher vorzugsweise als integraler Teil einer Instrumententafel ausgebildet ist, kann beispielsweise aus einem Kunststoff wie Polypropylen oder verstärktem Polypropylen bestehen.

Die Oberflächenschicht ist unmittelbar mit der Verstärkungsschicht verbunden. Die Verbindung kann beispielsweise durch das Auftragen eines Klebstoffs auf eine der Sichtseite abgewandte Unterseite der Oberflächenschicht und/oder der gegenüberliegenden Oberseite der Verstärkungsschicht bewirkt werden. Die Klebstoffschicht ist dabei vorzugsweise von gleichmäßiger Dicke und/oder ist durchgehend zwischen einem ungeschwächten und der lokalen Schwächung des geschwächten Bereichs aufgetragen um eine gleich bleibende Verbindung zwischen der Verstärkungsschicht und der Oberflächenschicht zu gewährleisten.

In einer bevorzugten Ausführungsform ist zwischen dem Träger und der Verstärkungsschicht eine weitere Schicht angeordnet. Diese weitere Schicht kann eine weiche Komponente wie beispielsweise einen Polyurethanschaum beinhalten. In diesem Falle ist die weitere Schicht bevorzugt zwischen 8 und 10 mm dick. Es kann jedoch auch ein Abstandsgewirke beispielsweise aus Polyester als Zwischenschicht fungieren. In diesem Falle ist eine Dicke zwischen 2 und 5 mm ausreichend. Für den Fall, dass die weitere Schicht ein Gewirke ist und die Verstärkungsschicht ebenfalls ein Gewirke ist, können die weitere Schicht und die Verstärkungsschicht in einem Verfahrensschritt hergestellt werden. Die Dicken verändern sich dementsprechend, so dass die Dicke des Abstandsgewirkes der weiteren Schicht und die Dicke des Gewirkes der Verstärkungsschicht miteinander addiert werden.

Die Länge, entlang welcher die Verstärkungsschicht vom ungeschwächten Bereich in den geschwächten Bereich mit der lokalen Schwächung übergeht, kann zwischen 20 und 50 mm betragen. Auf diese Weise wird sichergestellt, dass die lokale Schwächung von der Fahrzeuginnenraumseite her nicht wahrgenommen werden kann. Die Dicke der Verstärkungsschicht ändert sich entlang der Oberflächenschicht betrachtet zwischen dem ungeschwächten Bereich und der lokalen Schwächung der Verstärkungsschicht stetig.

Besonders bevorzugt wird die erfindungsgemäße Airbaganordnung als Teil einer Instrumententafel verwendet. Hierbei ist die Oberflächenschicht der Airbaganordnung integral, vorzugsweise einstückig, mit der Oberflächenschicht der Instrumententafel verbunden. In Bereichen der Instrumententafel, welche einen Umbug aufweisen, kann sich die Dicke der Lederoberfläche der Instrumententafel sprunghaft ändern, vorzugsweise zunehmen, um höhere Reißkräfte, wie sie in Bereichen von Umbügen auftreten, aufzunehmen. Es kann jedoch auch die unter der Lederoberfläche angeordnete Verstärkungsschicht, wie sie im Bereich der Airbagabdeckung angeordnet ist, in Bereichen außerhalb der Airbaganordnung entfernt werden (d.h. außerhalb des geschwächten Bereichs ggf. mit einem Teil des ungeschwächten Bereichs kann auf sie verzichtet werden), wobei die Dicke der Oberflächenschicht der Instrumententafel sprunghaft zunimmt, wobei die Dicke der Summe der Dicke der Oberflächenschicht der Airbaganordnung und der Dicke, der Verstärkungsschicht im Bereich der lokalen Schwächung annimmt.

Im Folgenden soll die Erfindung anhand einiger Ausführungsbeispiele erläutert werden. Es zeigen:
- Fig. 1: eine Instrumententafel mit einer Airbaganordnung;
- Fig. 2: einen Querschnitt durch die Airbaganordnung der Fig. 1;
- Fig. 3: eine alternative Ausführungsform einer Airbagabdeckung.

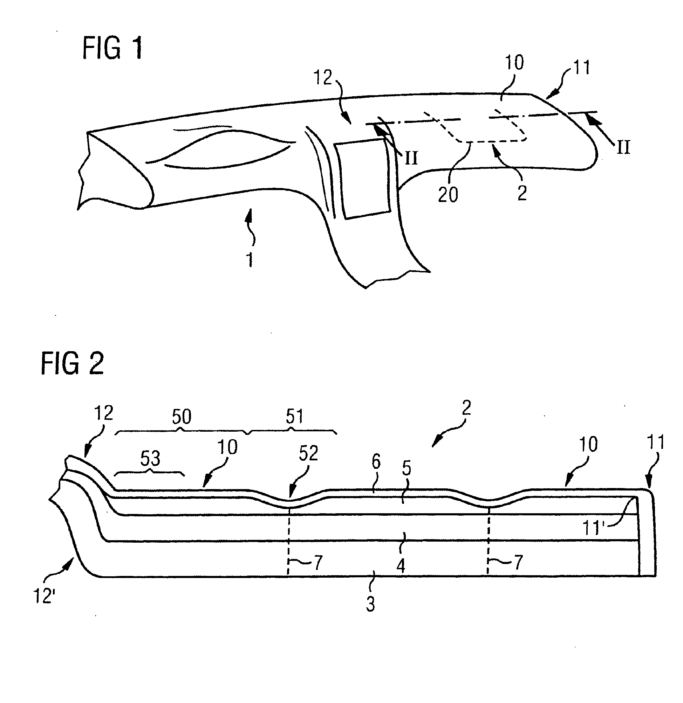

In der Fig. 1 ist eine Instrumententafel 1 mit einer auf der Beifahrerseite angeordneten Airbagabdeckung 2 gezeigt. Dabei ist die Airbagabdeckung 2 lediglich schematisch entlang einer Aufreißlinie 20 dargestellt.

Die Instrumententafel 1 weist eine einstückige Lederoberfläche 10 auf. Alternativ kann die Oberflächenschicht 10 auch aus mehreren großflächigen Oberflächenstücken zusammengesetzt werden, wobei die verschiedenen Stücke mit Nähten oder Verklebungen miteinander verbunden werden. Die Instrumententafel 1 weist zudem einen Rand 11 und eine Mittelkonsole 12 auf. Die Instrumententafel 1 weist eine nicht sichtbare Trägerstruktur auf, welche beispielsweise durch eine selbsttragende integrale Trägerstruktur gebildet sein kann. Die Instrumententafel 1 kann jedoch auch aus mehreren Teilstücken zusammengesetzt sein. Das bevorzugte Trägermaterial ist Polypropylen bzw. glasfaserverstärktes Polypropylen. Auf diesem kann eine zusätzliche Schaumschicht angeordnet sein, welche durch die Oberflächenschicht 10 abgedeckt wird.

In der Fig. 2 ist der Querschnitt II durch die Instrumententafel 1 gezeigt, wobei der Querschnitt II die Airbagabdeckung 2 schneidet.

Die Airbagabdeckung 2 weist-nur im Querschnitt sichtbar- einen Träger 3 auf, welcher als Teil des Trägers der Instrumententafel ausgebildet ist. Auf dem Träger 3 ist eine optionale weitere Schicht 4 aus einem Polyurethanschaumstoff angeordnet. Diese weitere Schicht dient der Verbesserung der haptischen Eigenschaften der Airbagabdeckung 2 bzw. der Instrumententafel 1. Auf der weiteren Schicht 4 ist eine Verstärkungsschicht 5 angeordnet, welche aus einer Polyolefin-Folie besteht. Die Verstärkungsschicht 5 weist einen ungeschwächten Bereich 50 auf, an welchen sich ein geschwächter Bereich 51 anschließt. Der geschwächte Bereich 51 beinhaltet eine lokale Schwächung 52, an welcher die Dicke der Verstärkungsschicht 5 auf ihr Minimum reduziert ist. Die Verstärkungsschicht 5 erstreckt sich nach links bis in die Nähe der Mittelkonsole 12. Der Teilabschnitt 53, welcher einen Teilbereich des ungeschwächten Bereichs 50 bildet, ist bereits als Teil der Instrumententafel 1 und nicht länger als Teil der Airbagabdeckung 2 zu verstehen. Auf der Verstärkungsschicht 5 ist eine Oberflächenschicht 6 angeordnet, welche im vorliegenden Fall als ein Teilbereich der Oberflächenschicht10 der Instrumen tentafel 1 ausgebildet ist. Wie aus der Fig. 2 entnehmbar ist, weist die Oberflächenschicht 6 im Bereich der Airbagabdeckung 2 eine einheitliche Dicke auf. Diese Dicke beträgt weniger als 0,5 mm, vorzugsweise 0,2 mm bis 0,3 mm.

Die Oberflächenschicht 6 erstreckt sich nach rechts hin in die Oberflächenschicht 10 übergehend über den Rand 11 der Instrumententafel 1 hinweg. Am Rand 11 befindet sich ein Umbug 11', entlang welchem die Oberflächenschicht 6 bzw. Oberflächenschicht 10 aufgebracht wird. Da in diesem Bereich des Umbugs insbesondere beim Aufkaschieren der Oberflächenschicht 6 bzw. Oberflächenschicht 10 höhere Zugkräfte auftreten, kann die Dicke der Oberflächenschicht in diesem Teilbereich gegenüber dem Bereich der einheitlichen Dicke der Oberflächenschicht 6 der Airbagabdeckung 2 sprunghaft zunehmen. Da ein Passagier eine derartige Verstärkung der Oberflächenschicht 6 bzw. Oberflächenschicht 10 aufgrund des Umbugs 11'nicht wahrnimmt, wird die optische Wirkung der Instrumententafel 1 nicht beeinträchtigt. Am anderen Ende der Fig. 2 erstreckt sich die Oberflächenschicht 6 in die Oberflächenschicht 10 übergehend in den Bereich der Mittelkonsole 12 hinein. Da auch hier verstärkt höhere Zugkräfte auf die Oberflächenschicht wirken können, nimmt die Dicke auch hier sprunghaft zu, ohne dass dies einem Betrachter auffällt. Die Zunahme der Dicke der Oberflächenschicht wird hier ebenfalls im Bereich des Umbugs 12' vorgenommen.

Die in der Fig. 2 gezeigte Verstärkungsschicht 5 weist im ungeschwächten Bereich 50 eine Dicke von 1 mm auf. Die Dicke der Verstärkungsschicht 5 an der lokalen Schwächung 52, welche direkt oberhalb der als Perforation 7 ausgebildeten Trägerausdünnung angeordnet ist, beträgt 0,05 mm. Von der lokalen Schwächung 52 zum ungeschwächten Bereich 50 wandernd erstreckt sich der geschwächte Bereich 51 über eine Länge von 30 mm. Hierdurch ist es möglich, dass die lokale Schwächung 52 trotz der verringerten Dicke für einen Betrachter unsichtbar bleibt. Die Länge von der lokalen Schwächung 52 bis zum Rand des geschwächten Bereichs 51 nach rechts hin beträgt ebenfalls 30 mm. Der Übergang vom ungeschwächten Bereich 50 zum geschwächten Bereich 51 hin verläuft bis zur lokalen Schwächung 52 stetig. Dies verbessert die Optik der Airbagabdeckung 2 bzw. der Instrumententafel 1.

Es ist deutlich zu erkennen, dass die Perforation 7 eine von der Sichtseite der Airbagabdeckung 2 her betrachtete und durch die Oberflächenschicht 10 verdeckte kleinere Fläche einnimmt als die Fläche des geschwächten Bereichs 51. Die Perforation 7 ist im Bereich der lokalen Schwächung 52 angeordnet, d.h. im Bereich minimaler, nicht-verschwindender Dicke der Verstärkungsschicht 5. Der gezeigte Schnitt der Airbaganordnung deutet die Perforationslöcher an. Es ist jedoch ebenso deutlich erkennbar, dass die nicht-verschwindende Dicke der Verstärkungsschicht im Bereich der lokalen Schwächung 52, unabhängig von der Perforation 7 oder ähnlichen als Aufreißlinie dienenden Materialaussparungen, geringer ist als im übrigen Bereich des geschwächten Bereichs 51 und auch des ungeschwächten Bereichs 50.

Der in der Fig. 2 dargestellte zweite geschwächte Bereich oberhalb der zweiten Perforation 7 ist zum geschwächten Bereich 51 analog ausgebildet.

Um den geschwächten Bereich 51 in die Verstärkungsschicht 5 einzubringen, wird zunächst eine Verstärkungsschicht 5 einheitlicher Dicke, wie sie im ungeschwächten Bereich 50 vorliegt, hergestellt. Anschließend wird der geschwächte Bereich 51 mit der lokalen Schwächung 52 eingebracht, entweder durch Pressen oder Heißschmelzen oder ähnliche Verfahren. So kann beispielsweise bei der Verwendung eines Kunstleders als Verstärkungsschicht der geschwächte Bereich mittels eines Spaltverfahrens eingebracht werden.

Die Aufreißlinie 20 der Airbagabdeckung 2 wird in der Fig. 1 durch die gestrichelte Linie dargestellt. Dabei wird die Aufreißlinie durch die Perforationen 7, wie im Querschnitt der Fig. 2 deutlich erkennbar, definiert. Die hier dargestellten Perforationen sind mittels eines Laserperforationsverfahrens eingebracht und durchdringen sowohl den Träger 3 als auch die weitere Schicht 4. Optional kann die Perforation auch die Verstärkungsschicht 5 im Bereich der lokalen

Schwächung 52 durchdringen. Hierdurch wird ein verbessertes Aufreißverhalten der Airbagabdeckung 2 erreicht.

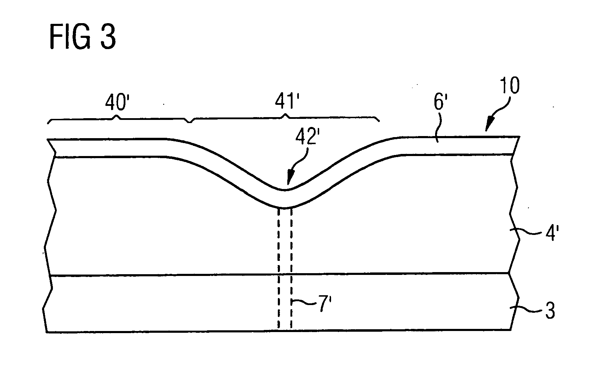

In der Fig. 3 wird ein alternativer Aufbau einer Airbagabdeckung 2' dargestellt. Dabei wird lediglich ein Teilbereich, welcher eine lokale Schwächung enthält, dargestellt.

Die Airbagabdeckung 2' weist ebenfalls einen Träger 3 auf. Auf diesem ist ein Gewirke 4' aufgebracht, welches zugleich als Abstandsgewirke und als Verstärkungsschicht dient. Das Gewirke 4' ist aus Polyester und kann in einem Formwerkzeug hergestellt werden. Dabei kann bereits bei der Herstellung des Gewirkes 4' der geschwächte Bereich 41' mit der lokalen Schwächung 42' mittels der definierten Form eines Formwerkzeugs eingebracht werden. Hierdurch vereinfacht sich das Herstellungsverfahren für die gesamte Airbaganordnung 2' drastisch. Die Dicke des Gewirkes 4' im ungeschwächten Bereich 40' beträgt 4 mm. Im Bereich der lokalen Schwächung 42' beträgt die Dicke 3 mm. Dabei ist im Bereich der lokalen Schwächung 42' eine Perforation 7' eingebracht, welche den Träger 3 und das Gewirke 4' durchdringt. Die auf dem Gewirke 4' angeordnete Oberflächenschicht 6' besteht aus einem Lederimitat. Die Dicke der Oberflächenschicht 6' beträgt 0,3 mm_{.} Diese Dicke wurde mittels eines Spaltverfahrens großflächig erzeugt. Die Länge zwischen dem ungeschwächten Bereich 40' und der lokalen Schwächung 42' beträgt 40 mm.

Substituiert man in der Fig. 3 das Gewirke 4' durch eine Polyolefinschicht geringerer Dicke, so kann diese Polyolefinschicht direkt auf dem Träger in einem Spritzverfahren hergestellt werden. Dabei weist bereits das Formwerkzeug die gewünschte Form mit ungeschwächtem Bereich und geschwächtem Bereich mit lokaler Schwächung auf. Anschließend muss lediglich die Oberflächenschicht 6' aufkaschiert werden. Die Dicke der Polyolefinschicht beträgt hierbei zwischen 1 mm im ungeschwächten und 0,05 mm im geschwächten Bereich.

## Patentansprüche

1. Airbagabdeckung (2; 2') mit einem Träger (3) und einer auf dem Träger angeordneten sichtseitigen Oberflächenschicht (6; 6') aus Leder oder einem Lederimitat, wobei die Oberflächenschicht eine einheitliche Dicke aufweist, wobei die einheitliche Dicke der Oberflächenschicht (6; 6') weniger oder gleich lamm beträgt der Träger eine entlang einer Aufreißlinie (20) eingebrachte Trägerausdünnung (7) hat und zwischen dem Träger und der Oberflächenschicht eine Verstärkungsschicht (4'; 5) mit einer lokalen Schwächung (42'; 52) angeordnet ist, wobei die Oberflächenschicht unmittelbar mit der Verstärkungsschicht verbunden ist,
**dadurch gekennzeichnet, dass** die Verstärkungsschicht (4'; 5) einen ungeschwächten Bereich (40'; 50) und einen geschwächten Bereich (41'; 51), welcher die lokale Schwächung (42'; 52) beinhaltet, aufweist und die Dicke der Verstärkungsschicht (4'; 5) vom ungeschwächten Bereich zur lokalen Schwächung des geschwächten Bereichs hin stetig abnimmt und die lokale Schwächung (42'; 52) im Bereich der Aufreißlinie durch eine minimale, nicht-verschwindende Dicke der Verstärkungsschicht (4'; 5) gebildet ist
und der geschwächte Bereich eine größere Fläche als die Aufreißlinie umfasst.

2. Airbagabdeckung nach Anspruch 1, **dadurch gekennzeichnet, dass** die einheitliche Dicke der Oberflächenschicht (6; 6') weniger als 0,5 mm beträgt.

3. Airbagabdeckung nach einem der Ansprüche 1 oder 2, **dadurch gekennzeichnet, dass** die Verstärkungsschicht (4'; 5) ununterbrochen ausgebildet ist.

4. Airbagabdeckung nach einem der vorhergehenden Ansprüche, **dadurch gekennzeichnet, dass** eine Länge eines Übergangs vom ungeschwächten Bereich in den geschwächten Bereich mit der lokalen Schwächung zwischen 20mm und 50mm beträgt.

5. Verwendung einer Airbagabdeckung nach einem der vorhergehenden Ansprüche in einer Instrumententafel.

6. Instrumententafel (1) mit einem Träger, einer Oberflächenschicht (10) aus einem Leder oder Lederimitat und einer Airbagabdeckung (2; 2') nach einem der vorhergehenden Ansprüche, **dadurch gekennzeichnet, dass** die Oberflächenschicht (6; 6') der Airbagabdeckung mit der Oberflächenschicht (10) der Instrumententafel integral verbunden ist, insbesondere vorzugsweise einstückig ausgebildet ist, und die Oberflächenschicht der Instrumententafel einen Umbug (11'; 12') aufweist und die Dicke der Oberflächenschicht (10) der Instrumententafel im Bereich des Umbugs sprunghaft ändert, vorzugsweise zunimmt.

7. Verfahren zu Herstellung einer Airbagabdeckung (2; 2') nach einem der Ansprüche 1 bis 4, wobei das Verfahren folgende Schritte umfasst:
a) Ausdünnung der gesamten Oberflächenschicht (6; 6') auf eine einheitliche Dicke unter 1 mm;
b) Aufbringen der Verstärkungsschicht (4'; 5) auf den Träger, wobei die Verstärkungsschicht im Bereich einer Aufreißlinie (20) eine lokale Schwächung (42'; 52) aufweist, welche im Bereich der Aufreißlinie eine minimale, nicht-verschwindende Dicke besitzt;
c) Verbinden der Oberflächenschicht (6; 6') einheitlicher Dicke mit der Verstärkungsschicht (4'; 5).

## Claims

1. An airbag cover (2; 2') comprising a carrier (3) and a surface layer (6; 6') of leather or imitation leather arranged on the carrier at the visible side, wherein the surface layer has a uniform thickness, the uniform thickness of the surface layer (6; 6) is less than or equal to 1 mm, the carrier has a carrier thinning portion (7) introduced along a tear line (20) and a reinforcement layer (4'; 5) having a local weakened portion (42'; 52) is arranged between the carrier and the surface layer and wherein the surface layer is directly connected to the reinforcement layer,
**characterized in that** the reinforcement layer (4'; 5) has a non-weakened region (40'; 50) and a weakened region (41'; 51) which includes the local weakened portion (42', 52) and the thickness of the reinforcement layer (4'; 5) decreases continuously from the non-weakened region toward the local weakened portion of the weakened region and the local weakened portion (42'; 52) is formed in the region of the tear line by a minimal, non-disappearing thickness of the reinforcement layer (4'; 5);
and the weakened region includes a larger area than the tear line.

2. An airbag cover in accordance with claim 1, **characterized in that** the uniform thickness of the surface layer (6; 6') amounts to less than 0.5 mm.

3. An airbag cover in accordance with one of the claims 1 or 2, **characterized in that** the reinforcement layer (4'; 5) is formed in an uninterrupted manner.

4. An airbag cover in accordance with one of the preceding claims, **characterized in that** a length of a transition area from the non-weakened region into the weakened region having the local weakened portion amounts to between 20 mm and 50 mm.

5. Use of an airbag cover in accordance with one of the preceding claims in a dashboard.

6. A dashboard (1) having a carrier, a surface layer (10) of leather or of imitation leather and an airbag cover (2; 2') in accordance with one of the preceding claims, **characterized in that** the surface layer ((6; 6') of the airbag cover is integrally connected to the surface layer (10) of the dashboard, is in particular preferably made in one piece, and the surface layer of the dashboard has a bend (11'; 12') and the thickness of the surface layer (10) of the dashboard varies, preferably increases, abruptly in the region of the bend.

7. A method of manufacturing an airbag cover (2; 2') in accordance with one of the claims 1 to 4, wherein the method includes the following steps:
a) thinning of the total surface layer (6; 6') to a uniform thickness below 1 mm;
b) applying the reinforcement layer (4'; 5) to the carrier, wherein the reinforcement layer has a local weakened portion (42'; 52) in the region of a tear line (20) which has a minimal, non-disappearing thickness in the region of the tear line;
c) connecting the surface layer (6; 6') of uniform thickness to the reinforcement layer (4'; 5).

## Revendications

1. Couvercle d'airbag (2 ; 2') avec un support (3) et une couche de surface ((6 ; 6') disposée sur le support du côté visible, en cuir ou en similicuir, dans lequel la couche de surface présente une épaisseur homogène, dans lequel l'épaisseur homogène de la couche de surface (6 ; 6') est inférieure ou égale à 1 mm, le support présente un amincissement de support (7) intégré le long d'une ligne de déchirure (20), et une couche de renforcement (4' ; 5) avec un affaiblissement local (42' ; 52) est agencée entre le support et la couche de surface, la couche de surface étant reliée directement à la couche de renforcement, **caractérisé en ce que**
la couche de renforcement (4' ; 5) comporte une région non affaiblie (40' ; 50) et une région affaiblie (41' ; 51) comprenant l'affaiblissement local (42' ; 52), et l'épaisseur de la couche de renforcement (4' ; 5) s'amincit en continu, à partir de la région non affaiblie vers l'affaiblissement local de la région affaiblie, et l'affaiblissement local (42' ; 52) est formé dans la région de la ligne de déchirure par une épaisseur minimale de la couche de renforcement (4', 5), sans disparition,
et la région affaiblie s'étend sur une surface plus grande que la ligne de déchirure.

2. Couvercle d'airbag selon la revendication 1, **caractérisé en ce que** l'épaisseur uniforme de la couche de surface (6 ; 6') est inférieure à 0,5 mm.

3. Couvercle d'airbag selon l'une des revendications 1 ou 2, **caractérisé en ce que** la couche de renforcement (4' ; 5) est conçue sans interruption.

4. Couvercle d'airbag selon l'une des revendications précédentes, **caractérisé en ce qu'**une longueur d'une transition entre la région non affaiblie et la région affaiblie avec l'affaiblissement local mesure entre 20 mm et 50 mm.

5. Utilisation d'un couvercle d'airbag selon l'une des revendications précédentes dans un tableau de bord.

6. Tableau de bord (1) avec un support, une couche de surface (10) en cuir ou en similicuir, et un couvercle d'airbag (2 ; i 2') selon l'une des revendications précédentes, **caractérisé en ce que** la couche de surface (6 ; 6') du couvercle d'airbag est reliée intégralement avec la couche de surface (10) du tableau de bord, en étant en particulier de préférence formée d'une seule pièce, et la couche de surface du tableau de bord comporte un rebord entourant (11' ; 12'), et l'épaisseur de la couche de surface (10) du tableau de bord se modifie soudain dans la région du rebord entourant, de préférence en grossissant.

7. Procédé pour la fabrication d'un couvercle d'airbag (2 ; 2') selon l'une des revendications 1 à 4, le procédé comprenant les étapes suivantes :
a) amincissement de l'ensemble de la couche de surface (6 ; 6') à une épaisseur homogène inférieure à 1 mm ;
b) application de la couche de renforcement (4' ; 5) sur le support, la couche de renforcement comportant un affaiblissement local (42' ; 52) dans la région d'une ligne de déchirure (20), présentant une épaisseur minimale dans la région de la ligne de déchirure, sans disparaître ;
c) assemblage de la couche de surface (6 ; 6') d'une épaisseur homogène avec la couche de renforcement (4' ; 5) .
